# EUROPÄISCHE PATENTANMELDUNG

(11) **EP 2 058 362 A1**
(43) Veröffentlichungstag der Anmeldung: **13.05.2009**
(21) Anmeldenummer: 08019173.7
(22) Anmeldetag: 03.11.2008
(51) Int. Cl.: C08K 3/34

(54) **Vergussmassen enthaltend Wachse speziell auf Basis von metallocen-katalysierten Polyolefinen insbesondere zur Verkapselungen von elektronischen Geräten und Bauteilen**

(30) Priorität: 07.11.2007 DE 102007052965
(71) Anmelder: Clariant International Ltd., 4132 Muttenz 1 (CH)
(72) Erfinder: Fell, Rainer, 86368 Gersthofen (DE); Diem, Hermann, 86517 Wehringen (DE); Mayr, Josef, 86684 Holzheim (DE)
(74) Vertreter: Hütter, Klaus

(57) **Zusammenfassung**

Vergussmasse enthaltend
a) ein oder mehrere Wachse auf Basis von metallocen-katalysierten Polyolefinen, die
• einen Erweichungspunkt Ring/Kugel im Bereich von 50 bis 165 °C,
• eine Schmelzviskosität, gemessen bei einer Temperatur von 170 °C, im Bereich von 20 bis 40.000 mPa·s und
• eine Glasübergangstemperatur T_{g} von maximal -10 °C besitzen und

b) einen oder mehrere anorganische Füllstoff/e.

Die Vergussmassen eignen sich zur Herstellung von Baumaterialien, insbesondere für die Herstellung von Verbindungselementen zur Verkapselungen von elektronischen Schaltungen, elektrischen Geräten, Motoren, Pumpen, wie z. B. Statorbefestigungen bei Tauchpumpenaggregaten, insbesondere als Vergussmittel für den Stator eines Elektromotors.

## Beschreibung

Die vorliegende Erfindung betrifft den Einsatz von Wachsen und metallocene-katalysierten Polyolefinen als Verkapselungen von elektronischen Schaltungen, elektrischen Geräten, Motoren, Pumpen sowie einzelne Bauteile und Baugruppen. Dabei werden Wachse und metallocene-katalysierte Polyolefine als Material oder als Bestandteil von Formulierungen, insbesondere in Verbindung mit einer großen Menge an Füllstoff (z. B. Sand), eingesetzt.

Polymere, Kunststoffe, Füllstoffe und deren Mischungen zur Verkapselung von elektrischen Baugruppen verwendet. Bisher wurde Verkapselung (Sandfixierung) nur mit Hilfe von giftigen und umweltbelastenden Stoffen (wie z. B. Monomere von Kunstharzen) oder nur mit Hilfe von schädlichen Lösungsmitteln wie Petroleum, Schwerbenzin, Leichtbenzin und Benzol als Lösungsmittel nach dem komplizierten Kohlensäure-Erstarrungsverfahren hergestellt.

Beispielsweise werden Statoren von Tauchpumpenaggregaten mit achsgleich angeordneten Nasslaufmotoren hermetisch gekapselt. Dies erfolgt in der Regel mit einem Gemisch aus Sand (Quarzsand), Harzen (Epoxidharz) und Zugschlagstoffen (Additive).
Ein derartiges Tauchpumpenaggregat ist beispielsweise aus DE-C-36 09 311 bekannt. Aus dieser Druckschrift ist auch der grundsätzliche Aufbau solcher Aggregate zu entnehmen, die vorwiegend zur Förderung von reinem oder leicht verschmutztem Wassers benutzt werden.

Beim Verzicht auf das Vergussmaterial im Bauteil (Stator) können Probleme auftreten. Es besteht die Gefahr, dass aufgrund des fehlenden Vergussmaterials der Wicklungskopf an seinem Außenumfang in unmittelbaren Gehäusekontakt kommt und dies zu einem elektrischen Kurzschluss führt.
Weiterhin besteht das Problem, dass innerhalb des Statorraums üblicherweise ein Kondensator angeordnet ist, der bei bekannten Konstruktionen in die Vergussmasse eingebettet ist und durch diese innerhalb des Gehäuses gehalten wird. Bei fehlender Vergussmasse ist somit eine zusätzliche Halterung für den Kondensator zu schaffen, wodurch die Fertigung des Aggregats sich aufwendiger gestaltet.
Zudem können, je nach Belastung des Motors, beim Fehlen der Vergussmasse thermische Probleme innerhalb der Statorwicklung auftreten, da die dort entstehende Verlustwärme nicht mehr in ausreichendem Masse abgeführt werden kann.
Außerdem nimmt die Vergussmasse bei schnell laufenden Bauteilgruppen aufgrund ihrer hohen Masse positiven Einfluss auf das Resonanzverhalten (Eigenschwingungsverhalten) und dient zur mechanischen Stabilisierung respektive Geräuschdämpfung und zur Laufruhe bei.

Im Allgemeinen werden als Vergussmasse Mischungen aus Füllstoffen (z. B. Sand) und warmaushärtbaren Kunstharzen, im wesentlichen Epoxidharz, Härter sowie Zusatzstoffen, verwendet. Epoxidharze für diese Anwendung sind bekannt. An sie werden insbesondere beim Verguss der Statoren von Elektromotoren besondere Anforderungen gestellt. Die Vergussmasse muss einerseits einen dichten Einschluss des darin eingebetteten Stators im Motorgehäuse gewährleisten und andererseits zumindest einen Teil der im Stator erzeugten Wärme (Verlustwärme) ableiten. Schließlich sind in allen Betriebszuständen erhöhte Anforderungen an die Elastizität und Festigkeit der Vergussmasse gestellt, um die beim Betrieb auftretenden Schwingungen und mechanische Wechselbelastungen aufnehmen zu können.

Nachteile einer Epoxid-Vergussmasse sind:
- zeitintensiver Fertigungsprozess aufgrund von langen Aushärtzeiten, lange Gelierzeiten, hohe Fertigungs- und Materialkosten
- Kunstharze (Epoxidharze) weisen meist eine hohe Viskosität auf und somit ein schlechtes Eindringverhalten in den Füllstoff (z. B. Sand). Die Benetzung von Füllstoffen (Sandkörner) erfolgt meist unter hoher Druckbeaufschlagung
- Elastizität und mechanische Festigkeit der Vergussmasse verschlechtern sich bei längerer Betriebsdauer. Epoxidharze härten durch und werden spröde. Es entstehen Risse sowohl im Sandkörper als auch zwischen Sandkörper und Gehäusewand. Dies kann eine Verkürzung der Lebenszeit bedingen
- derartige Vergussmassen sind nur in hohem Temperaturbereich elastisch, in übrigen jedoch eher spröde, so dass sie vermehrt zur Rissbildung neigen
- Kunstharze härten aus und führen zu Sprödbruch. Eine Sandfixierung ist nicht mehr gewährleistet. Die Ableitung der Verlustwärme ist nicht mehr gegeben
- Monomere der Epoxidharze gelten als sensibilisierend und haben während der Verarbeitung eine Geruchsbelästigung zur Folge. Der Umgang mit Epoxidharzen stellt entsprechende hohe Anforderungen an Arbeitshygiene und Sicherheitseinrichtungen.

Zwar kann die vorher erwähnte Sprödigkeit der Vergussmasse bei niedrigen Temperaturen durch den Zusatz von Faserstoffen verhindert werden, hierbei wird die Viskosität des (noch flüssigen) Kunstharzes allerdings so stark erhöht, dass die Fliessfähigkeit erheblich vermindert wird. Faserzusatzstoffe sind im Allgemeinen verhältnismäßig teuer. Der Zusatz von kautschukartigen Substanzen zur Elastifizierung von Vergussmassen unter Bildung von elastischen Phasen ist ebenfalls bekannt. Auch hierdurch wird die Fliessfähigkeit des Kunstharzes stark beeinflusst.

Ferner ist bekannt, Polyamine (Polyamide) in kaltaushärtenden Systemen einzusetzen. In warmaushärtenden Systemen hat man bisher solche Zusatzstoffe nicht eingesetzt, da eine die Viskosität ungünstig beeinflussende Ausscheidung zu befürchten ist und solche Zusatzstoffe nicht in ausreichendem Masse temperaturbeständig sind.

Der vorliegenden Erfindung liegt daher die Aufgabe zugrunde, bei elektronischen Geräten oder Bauteilen, wie z.B. Tauchpumpenaggregaten, die Vergussmasse so auszubilden, dass einerseits die beim Einsatz einer Epoxid- oder Polyamidvergussmasse genannten Nachteile vermieden werden und andererseits Material- sowie Fertigungskostenvorteile erreicht werden, um eine rationelle Herstellung solcher Aggregate zu ermöglichen.

Ausgehend von diesem Stand der Technik liegt der Erfindung die Aufgabe zugrunde, eine Vergussmasse zur Verfügung zu stellen, welche die vorgenannten Nachteile nicht aufweiset und eine für die Massenfertigung geeignete, kostengünstige Vergussmasse zu schaffen, welche eine vergleichsweise hohe Elastizität und Festigkeit in weiten Temperaturbereichen aufweist, um gerade die sonst häufig bei schnellaushärtenden Systemen zu beobachtende Gefahr der Rissbildung zu verhindern. Bei der erfindungsgemäßen Vergussmasse ist dies jedoch erstaunlicherweise nicht der Fall.

EP-A-1 290 100 beschreibt Polyolefine, insbesondere Copolymere aus Propylen und Hexen, gekennzeichnet durch Speichermodul-Werte G' von > 0,01 Pa und G''/G'Verhältnisse von > 18 bei G' = 10 Pa. Diese Werte stehen für ein hohes Deformationspotential dieser Copolymere.

In US 2006-0100335 werden Kompositionen beschrieben, die aus Ethylen/ C3-C20 Copolymeren oder C3-C30-Homopolymeren oder Coplymeren und mindestens 40 Gew.-% eines Füllstoffes bestehen, sowie deren verbesserte Verarbeitbarkeit zu gefertigten Artikeln, beispielsweise Folien, Bodenbelägen oder Wandverkleidungen. Hinweise zu Klebeeigenschaften dieser Kompositionen oder deren Verwendung als Vergussmasse sind nicht gegeben.

Keine der vorstehend aufgeführten Druckschriften gibt Hinweise auf die Verwendungsmöglichkeit von Polyolefinen für den Einsatz als Befestigungsmaterial respektive als Vergussmasse für die Verkapselungen von elektronischen Schaltungen, elektrischen Geräten, Motoren, Pumpen sowie einzelne Bauteile und Baugruppen, beispielsweise in Beton, Holz, Metall, Kunststoff oder Stein.

Überraschenderweise wurde gefunden, dass Füllstoffe, wie z.B. Sand, in Verbindung mit Wachsen, speziell auf Basis von metallocene-katalysierten Polyolefinen als Vergussmassen mit erhöhter Elastizität und Festigkeit eingesetzt werden können.

Die vorliegende Erfindung betrifft daher Vergussmassen enthaltend:
a) ein oder mehrere Wachse speziell auf Basis von metallocen-katalysierten Polyolefinen, und
b) einen oder mehreren Füllstoff/e, insbesondere anorganische Füllstoffe, wobei die Wachse a)
   - einen Erweichungspunkt Ring/Kugel im Bereich von 50 bis 165 °C,
   - eine Schmelzviskosität, gemessen bei einer Temperatur von 170 °C, im Bereich von 20 bis 40.000 mPa·s und
   - eine Glasübergangstemperatur T_{g} von maximal-10 °C besitzen.

Die erfindungsgemäße Vergussmasse besitzt eine über weite Temperaturbereiche vergleichsweise hohe Festigkeit und Elastizität, welche insbesondere von hoher Bedeutung bei Motoren mit hoher Wechselbelastung ist. Die betreffende Vergussmasse ist daher insbesondere für den vorgenannten Prozess (Vergießen des Stators eines Elektromotors) in der Massenfertigung gut geeignet, da das flüssige und gut fließfähige Wachs bzw. die metallocene-katalysierten Polyolefine sehr gute Benetzungseigenschaften aufweisen und ohne großen Aufwand bei vergleichsweise geringem Druck verarbeitet werden können.

Bei Kunstharzen muss der Verarbeitungsdruck aufgrund hoher Viskosität meist über ein gewisses Maß angehoben werden und es besteht die Gefahr, dass die Statorwicklung beschädigt wird: dies ist beim Einsatz der erfindungsgemäßen Vergussmassen nicht gegeben.

Die Erfindung betrifft ferner die Herstellung und Verwendung der vorstehend genannten Vergussmasse zur Verkapselung von elektronischen Schaltungen, elektrischen Geräten, Motoren, Pumpen sowie einzelner Bauteile und Baugruppen.

Bevorzugt werden die Wachse a) auf Polyolefinbasis die insbesondere durch Polymerisation von Ethylen und Propylen in Gegenwart von Metallocenen als Katalysator hergestellt wurden und vorzugsweise einen Schmelzindex MFI von mehr als 30 g/10 min, gemessen nach ISO 1133 bei einer Temperatur von 190 °C und einem Auflagegewicht von 2,16 kg aufweisen.

Das Verhältnis von Verlustmodul G" zu Speichermodul G' beträgt dabei vorzugsweise < 18 bei G'= 10 Pa . Der Speichermodulwert (storage modulus) G' liegt dabei im Bereich von 10.000 MPa bis 0,0015 MPa, bevorzugt bei 1.000 MPa bis 0,1 MPa, besonders bevorzugt bei 100 MPa bis 0,2 MPa.

Als anorganischen Füllstoffe kommen eine Vielzahl von anorganischen Salzen und Mineralien in Frage, bevorzugt sind hier zu nennen, Sande, Kreiden, natürliche gemahlene oder gefällte Calciumcarbonate, Calcium-Magnesium-Carbonate, Calciumoxid, Silicate, Schwerspat, Graphit sowie Russ. Auch blättchenförmige Füllstoffe, wie z.B. Vermiculit, Glimmer, Talk oder ähnliche Schichtsilikate, sind als Füllstoffe geeignet. Es kann gegebenenfalls zweckmäßig sein, dass zumindest ein Teil der Füllstoffe oberflächenbehandelt ist. Bevorzugte Ausführungsformen der erfindungsgemäß verwendeten Zusammensetzungen enthalten als Füllstoff einen naturbelassenen feinen Strandsand.

Das Gewichtsverhältnis der oben genannten Wachse und metallocene-katalysierten Polyolefinen zu anorganischem Füllstoff in den erfindungsgemäß verwendeten Zusammensetzungen liegt im Bereich von 1 : 99 bis 99 :1, bevorzugt 10 : 90 bis 90 : 10. Insbesondere erhält die Zusammensetzung 61 bis 89 Gew.% Polyolefin und 11 bis 39 Gew.% Füllstoff, außerordentlich bevorzugt 65 bis 85 Gew.% Polyolefin zu 15 bis 35 Gew.% Füllstoff.

Bevorzugt enthalten die erfindungsgemäß verwendeten Vergussmassen Wachse speziell auf Basis von metallocen-katalysierten Polyolefinen mit Schmelzviskositäten, gemessen bei einer Temperatur von 170 °C, von 50 bis 30.000 mPa·s, besonders bevorzugt 100 bis 20.000 mPa·s.

In einer bevorzugten Ausführungsform werden Polyolefine mit einer zahlenmittleren Molmasse Mₙ im Bereich von 500 und 20.000 g/mol, bevorzugt im Bereich von 800 und 10.000 g/mol, besonders bevorzugt im Bereich von 1.000 und 5.000 g/mol eingesetzt und einer gewichtsmittleren Molmasse M_{w} im Bereich von 1.000 und 40.000 g/mol, bevorzugt im Bereich von 1.600 und 30.000 g/mol, besonders bevorzugt im Bereich von 2.000 und 20.000 g/mol und außerordentlich bevorzugt im Bereich von 2.500 und 10.000 g/mol. Die Bestimmung der Molmasse erfolgt gelpermeationschromatographisch.

Weiter bevorzugt sind Zusammensetzungen, welche die vorstehend genannten Wachse und metallocene-katalysierten Polyolefine enthalten, bei denen das Verhältnis von Verlustmodul G" zu Speichermodul G' bei einem Wert G' = 10 Pa im Bereich von 17 bis 0,1 bevorzugt im Bereich von 10 bis 0,2 besonders bevorzugt im Bereich von 5 bis 0,3 liegt. Die Bestimmung von G'und G" erfolgt in DMA (Dynamisch-Mechanischen-Analyse)) von TA Instruments Q800.

Die erfindungsgemäßen Zusammensetzungen enthalten insbesondere Wachse und metallocene-katalysierten Polyolefine, die aus Homopolymeren des Propylens und/oder Copolymeren aus Propylen und Ethylen ausgewählt sind, wobei die Copolymeren vorzugsweise zu 70 bis 99,9, besonders bevorzugt zu 80 bis 99 Gew.-%, aus einer Olefinart bestehen.
In einer weiteren bevorzugten Ausführungsform enthalten die Zusammensetzungen Copolymere aus Propylen und Ethylen, wobei der Gehalt an Struktureinheiten, hervorgegangen aus Propylen, 61 Gew.-% bis 99,9 Gew.-%, bevorzugt 70 bis 99, besonders bevorzugt 80 bis 95 Gew.-% beträgt.

In einer bevorzugten Ausführungsform enthalten die erfindungsgemäßen Zusammensetzungen, zusätzlich zu den Komponenten a) und b) noch die Komponente c) wobei
c) für ein oder mehrere polar modifizierte Copolymerwachse, hergestellt durch Umsetzung des Polyolefins a) mit einer α, β -ungesättigten Carbonsäure oder deren Derivaten in Gegenwart von Radikalbildnern steht.

Die unter c) genannten polar modifizierten Copolymerwachse können nach der in EP-A-0 941 257 beschriebenen Methode hergestellt werden. Bevorzugt sind polar modifizierte Copolymerwachse, die sich ableiten aus Polyolefinen, bevorzugt aus Polypropylen, modifiziert mit Maleinsäureanhydrid und/ oder Maleinsäure. Die erfindungsgemäßen Zusammensetzungen aus den Komponenten a) und b) oder a), b) und c) können bei der Verwendung als Baumaterialien, Vergussmasse oder Verbindungselementen ohne weitere Zusatzstoffe zum Einsatz kommen und gegebenenfalls zusätzlich eine oder mehrere Klebekomponente d), ausgewählt aus der Gruppe der Harze enthalten.

Als weitere zusätzliche Klebekomponente d) kommen aliphatische und cycloaliphatische oder aromatische Kohlenwasserstoffharze in Betracht. Diese können durch Polymerisation bestimmter Harzölfraktionen hergestellt werden, die bei der Aufbereitung von Erdöl anfallen. Derartige Harze, die z.B. durch Hydrierung oder Funktionalisierung modifiziert werden können, sind beispielsweise unter den Handelsnamen Eastoflex^{®}, RegaIREZ^{®}, Kristalex^{®}, Eastotac^{®}, Piccotac^{®} (Eastman Chemical Company) oder Escorez^{®} (ExxonMobil Chemical Company) erhältlich.

Weiter kommen als zusätzliche Klebekomponente d) Polyterpen-Harze in Betracht, hergestellt durch Polymerisation von Terpenen, beispielsweise Pinen in Gegenwart von Friedel-Crafts-Katalysatoren, desgleichen hydrierte Polyterpene, Copolymere und Terpolymere von natürlichen Terpenen, beispielsweise Styrol/Terpen- oder α-Methylstyrol/Terpen-Copolymere. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate sowie phenol-modifizierte Pentaerithrolester von Harzen und phenol-modifizierte Terpen-Harze.

Die genannten Harze d) sind in der erfindungsgemäßen Vergussmasse einzeln oder in beliebiger Kombination in Gewichtsmengen, bezogen auf das Gesamtgewicht der Zusammensetzung, im Bereich von 0 bis 90 Gew.-%, bevorzugt von 10 bis 50 Gew.-%, besonders bevorzugt von 15 bis 40 Gew.-%, enthalten.

In einer ganz besonders bevorzugten Ausführungsform enthält die Vergussmasse ein oder mehrere Klebekomponenten d), ausgewählt aus amorphen Poly-alpha-Olefinen (= APAOs), z.B. den Typen der Vestoplast^{®}-Reihe (Degussa) oder den Rextac^{®}-Typen der Fa. Huntsman, aliphatischen, cycloaliphatischen oder aromatischen Kohlenwasserstoffharzen, wie sie z.B. unter dem Handelsnamen Escorez^{®} bei Exxon Mobile erhältlich sind, ferner Polyisobutylen, erhältlich z.B. unter dem Handelsnamen Oppanol^{®} bei BASF. Weiterhin können auch andere Polyolefine, etwa Niederdruck-Polyethylene, wie sie z.B. unter dem Namen Affinity^{®} bei Dow Chemical verfügbar sind, enthalten sein, ferner Hochdruckpolyethylene, auch solche mit polaren Comonomeren wie z.B. Ethylen-Vinylacetat. Die Gesamtmischung der so beschaffenen Vergussmassen-Zusammensetzungen haben eine Viskosität im Bereich von 100 bis 10.000 mPa·s bei 170 °C, bevorzugt von 120 bis 9.000 mPa·s bei 170 °C, besonders bevorzugt von 130 bis 8.000 mPa·s bei 170 °C.

Gegebenenfalls können die erfindungsgemäßen Vergussmassen noch Pigmente, Farbstoffe, Antioxidantien, Geruchsbinder, antimikrobielle Wirksubstanzen, Lichtschutzmittel, Duftstoffe, Haftvermittler sowie Additive zur Erhöhung der Wärmeleitfähigkeit und oder Erhöhung/Reduzierung der elektrischen Leitfähigkeit (z.B. Kupfer, Graphit) enthalten. Solche einsetzbaren Zusatzstoffe sind dem Fachmann bekannt und werden daher hier nicht weiter im Detail beschrieben.

Für die Herstellung, der in den erfindungsgemäß verwendeten Vergussmassen enthaltenenen Wachse auf Basis von metallocen-katalysierten Polyolefinen, werden Metallocenverbindungen der Formel I als Katalysator eingesetzt.

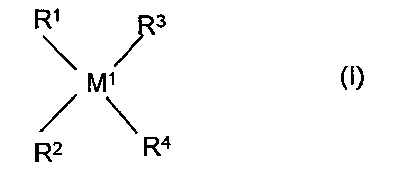

Diese Formel umfasst auch Verbindungen der Formel la, 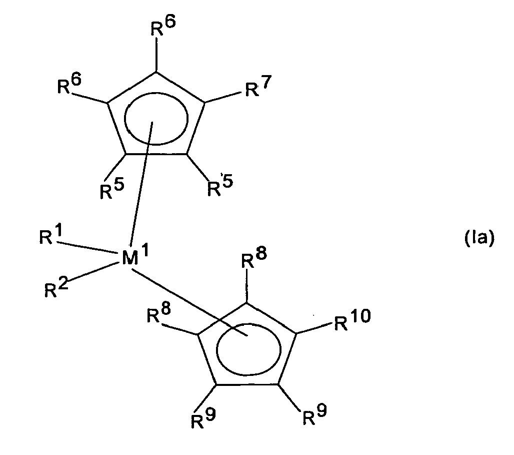 der Formel Ib, 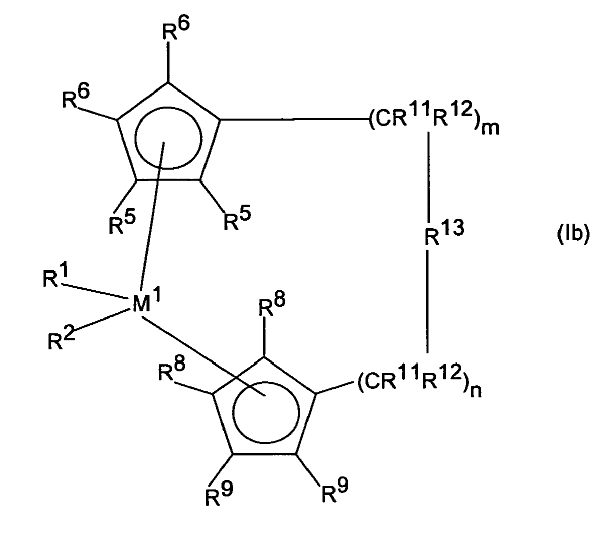 und der Formel Ic.

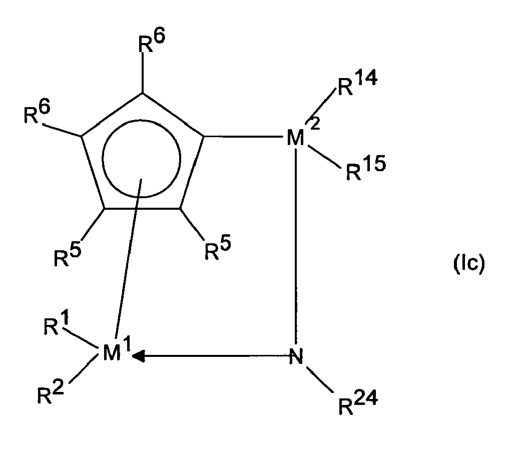

In den Formeln I, la und Ib ist M¹ ein Metall der Gruppe IVb, Vb oder Vlb des Periodensystems, beispielsweise Titan, Zirkonium, Hafnium, Vanadium, Niob, Tantal, Chrom, Molybdän, Wolfram, vorzugsweise Titan, Zirkonium und Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbunden sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 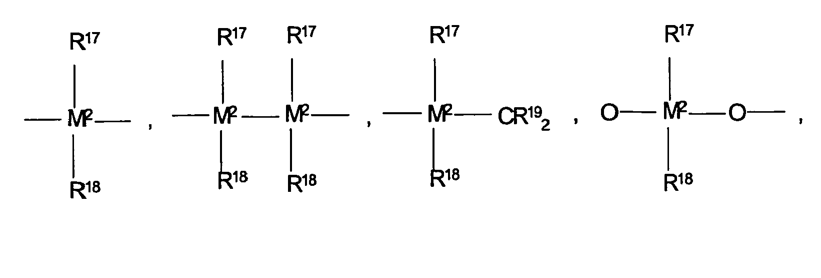 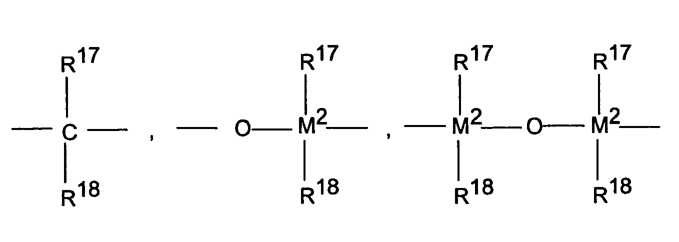 =BR¹⁷, =AIR¹⁷, -Ge-, -Sn-, -O-, -S-, =SO, =SO₂, =NR¹⁷, =CO, =PR¹⁷ oder =P(O)R^{17,} wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Konkrete Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z.B. Triethylaluminium, Tributylaluminium und andere sowie Mischungen aus diesen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Verfahren zur Herstellung derartiger metallocene-katalysierten Polyolefine sind beispielsweise im Stand der Technik wie EP-A-0 321 851, EP-A-0 321 852, EP-A-0 384 264, EP-A-0 571 882 und EP-A-0 890 584 beschrieben.

Die Synthese der Wachse a) kann unter einem Druck von 0,1 bis 10 MPa in Gasphase oder in Suspension oder in Lösung in einem geeigneten Suspendier-/Lösungsmittel nach bekannten Technologien erfolgen.
Metallocenkatalysatoren zur Herstellung von metallocene-katalysierten Polyolefinen sind chirale oder achirale Übergangsmetallverbindungen der Formel M¹Lₓ. Die Übergangsmetallverbindung M¹Lₓ enthält mindestens ein Metallzentralatom M¹, an das mindestens ein π-Ligand, z.B. ein Cyclopentadienylligand, gebunden ist. Darüber hinaus können Substituenten, wie z.B. Halogen-, Alkyl-, Alkoxy- oder Arylgruppen an das Metallzentralatom M¹ gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, so genannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z.B. beschrieben in EP-A-0 632 063.

Beispiele für allgemeine Strukturformeln von Metallocenen sowie für deren Aktivierung mit einem Cokatalysator sind u.a. in EP-A-0 571 882 gegeben.

Da die so hergestellten Polyolefine keine reaktiven chemischen Gruppen enthalten, sind sie chemisch inert, so dass mit handelsüblichen Materialien wie Metallen und Kunststoffen keine chemische Reaktion stattfindet, was in Bezug auf die Auslegung der Bauteilgruppen und der Lebensdauer von außerordentlichem Vorteil ist.

Die Wachse a) liegen zur Herstellung der erfindungsgemäßen Vergussmasse für den Gebrauch in elektronischen und mechanischen Bauteilgruppen als Granulat, Pulver oder Block vor und können in Platten, Profile, dreidimensionale Körper problemlos geformt werden.

Die verwendeten Wachse a) auf Basis von metallocen-katalysierten Polyolefinen weisen eine sehr hohe Schmelzenthalpiedichte (70 bis 280 J/g bei Dichten von 0,9 kg/dm³ bis 0,97 kg/m³) auf. Die Schmelzpunkte liegen im Bereich von 80 bis 160 °C. Zudem sind sie toxikologisch unbedenklich, chemisch inert und weisen keine Entmischung auf. Die erfindungsgemäßen Zusammensetzungen eignen sich für die Verwendung zur Herstellung von Vergussmassen und Baumaterialien, insbesondere für die Herstellung von Verbindungselementen zur Befestigung und Fixierung von elektrischen und mechanischen Bauteilen in Bauteilgruppen und Aggregaten, wie z.B. Statorbefestigung in Tauchpumpenaggregaten.
Hersteller der vorgenannten einsetzbaren metallocene-katalysierten Polyolefinwachse (Licocene^{®} Performance Polymers) ist z. B. die Clariant Produkte (Deutschland) GmbH.

Die erfindungsgemäße Vergussmasse hat den Vorteil zu den im Stand der Technik bekannten Baumaterialien, dass sie eine kürzere Abbindezeit (Erstarrungszeit) aufweisen ohne einen Verlust an Adhäsions- und Kohäsionskräften zu erleiden, eine verbesserte Zugfestigkeit (tensile N) und Steifheit (elongation) zeigen ohne spröde zu sein und gleichzeitig ein günstiges Viskositätsverhalten hat, sowie toxikologisch und ökologisch unbedenklich ist und in einfacher Weise zu handhaben sind.
Das Dehnvermögen bzw. die Steifheit der Vergussmassen, ermittelt durch die "Elongation in % ist für den Bestimmungszweck ideal, d.h. es wird eine gute Steifheit erzielt ohne dass diese spröde sind und beim Einsatz Risse und Sprödbruch auftritt. Vergussmassen mit sehr hohen Anteilen an Füllstoff (Sand) zeigen kaum eine Dehnung (Elongation = 0%) und haben eine hohe Tendenz zur Rissbildung und Sprödbruch.

Da die Abbindezeiten (Erstarrungszeit) der Vergussmassen sehr gering sind, können die Verbindungselemente in einfacher Weise innerhalb sehr kurzer Zeit montiert werden. Besonders vorteilhaft sind Vergussmassen mit einem Füllstoffanteil höher als 40 Gew.-% bezogen auf die Gesamtzusammensetzungen.

Ein weiterer Vorteil der erfindungsgemäßen Vergussmassen ist die Tatsache, dass Wachse und metallocene-katalysierte Polyolefine ein thermoplastisches Verhalten zeigen und im Gegensatz zu Duroplasten (Epoxidharze) ein ausgeprägtes Kriechverhalten aufweisen. Dies führt dazu, dass der Vergussmassenkörper (Sandkörper) sich während der Betriebszeit selbst verdichtet.

### Beispiele

Die nachfolgenden Beispiele sollen die Erfindung näher erläutern, ohne sie jedoch auf die konkret angegebenen Ausführungsformen zu beschränken. Prozentangaben sind, wenn nicht anders angegeben, als Gewichtsprozente zu verstehen.

Die Schmelzviskositäten wurden nach DIN 53019 mit einem Rotationsviskosimeter, die Tropfpunkte nach ASTM D3954, die Erweichungspunkte Ring/Kugel nach ASTM D3104 bei puren Licocene^{®}, bestimmt. Das Molmassengewichtsmittel M_{w} und das Molmassenzahlenmittel Mₙ wurden durch Gelpermeationschromatographie bei einer Temperatur von 135 °C in 1,2-Dichlorbenzol ermittelt.

Die Werte für die Speichermodule G'und die Verlustmodule G" wurden in einem Temperaturbereich von -40 bis 200 °C bei 1 Hz in einer DMA von TA Instruments Q800, Kompressionskit bestimmt. Die Probe (Maße: 29 x 9,5 x 4,5 mm) wurde vor dem Prüfen 24 h unter Normbedingungen gelagert.
Die Zugfestigkeit (tensile N) wird ermittelt, indem ein Prüfkörper (Schulterstab) einer Zugkraft ausgesetzt wird und die Kraft gemessen wird bei der der Prüfkörper reißt. Die Dehnung (elongation at break %) ist die Dehnfähigkeit bis zum Reißen des Prüfkörpers.

Das erfindungsgemäß eingesetzte Ethylen-Propylen Copolymer Licocene^{®} Performance Polymer nach im Stand der Technik gemäß EP 0 384 264 angegebenen Verfahren hergestellt.

| Formulierung 1 (F1) | |
|---|---|
| Licocene^{®} PP 6102 | 90 % |
| Sand | 10 % |
| | |

| Formulierung 2 (F2) | |
|---|---|
| Licocene^{®} PP 6102 | 70 % |
| Sand | 30 % |

| Formulierung 3 (F3) | |
|---|---|
| Licocene^{®} PP 6102 | 50 % |
| Sand | 50 % |
| | |

| Formulierung 4 (F4) | |
|---|---|
| Licocene^{®} PP 6102 | 30 % |
| Sand | 70 % |
| | |

| Formulierung 5 (F5) | |
|---|---|
| Licocene^{®} PP 6102 | 10 % |
| Sand | 90 % |
| | |

| Formulierung 6 (F6) | |
|---|---|
| Licocene^{®} PP 2602 | 30 % |
| Sand | 70 % |
| | |

| Formulierung 7 (F7) | |
|---|---|
| Licocene^{®} PP 1602 | 30 % |
| Sand | 70 % |

### Kugeldruckhärten:

| Form. | Produkt | Last | Durchmesser | Eindringtiefe [µm] | | DGF M-III 9c (98) | in Anlehnung an ISO 2039-1 | Anteil [%] | |
|---|---|---|---|---|---|---|---|---|---|
| | | [kg] | [m] | Belastung | Entlastung | [KPa] | [N/mm²] | elastisch | plastisch |
| F1 | 10 % Sand + 90 % PP 6102 | 10 | 0,005 | 219 | 165 | 28.517 | 29 | 25 | 75 |
| F2 | 30 % Sand + 70 % PP 6102 | 10 | 0,005 | 220 | 181 | 28.387 | 28 | 18 | 82 |
| F3 | 50 % Sand + 50 % PP 6102 | 10 | 0,005 | 214 | 167 | 29.183 | 29 | 22 | 78 |
| F4 | 70 % Sand + 30 % PP 6102 | 10 | 0,005 | 242 | 223 | 25.807 | 26 | 8 | 92 |
| F5 | 90 % Sand + 10 % PP 6102 | 10 | 0,005 | > 1.400 | | - | - | - | - |
| F6 | 30 % Sand + 70 % PP 2602 | 10 | 0,005 | 317 | 138 | 19.701 | 20 | 56 | 44 |
| F7 | 30 % Sand + 70 % PP 1602 | 10 | 0,005 | 1089 | 378 | 5.735 | 6 | 65 | 35 |

### Mechanische Festigkeiten:

| Form. | Produkt | Elastizitätsmodul E-Modul MPa | Kraftmaximum Rm N/mm² | Bruchkraft RB N/mm² | Dehnung bei Kraftmaximum {epsilon}-F max % |
|---|---|---|---|---|---|
| | Licocene PP 1602 | 20 | 3 | - | 225 |
| | Licocene PP 2602 | 90 | 7 | - | 40 |
| F 7 | 30 % Sand + 70 % PP 1602 | 160 | 5 | 4 | 9 |
| F 6 | 30 % Sand + 70 % PP 2602 | 500 | 7 | 6 | 4 |

### Dynamisch-Mechanische-Analyse (DMA):

| Formulierung | Produkt | DMA | | | | |
|---|---|---|---|---|---|---|
| | | | Speichermodul | Verlustmodul | tan Delta | max. tan Delta / Temperatur in °C |
| | | Temperatur in °C | G' in MPa | G" in MPa | | |
| F1 | 90 % Licocene^{®} PP 6102 + 10 % Sand | 0 | 27,37 | 3,65 | 0,13 | 68 |
| | | 20 | 10,11 | 1,15 | 0,12 | |
| | | 50 | 3,50 | 0,66 | 0,19 | |
| | | 100 | 0,69 | 0,13 | 0,19 | |
| F2 | 70 % Licocene^{®} PP 6102 + 30 % Sand | 0 | 27,48 | 3,38 | 0,12 | 74 |
| | | 20 | 11,00 | 1,26 | 0,11 | |
| | | 50 | 4,50 | 0,90 | 0,20 | |
| | | 100 | 0,72 | 0,15 | 0,21 | |
| F3 | 50 % Licocene^{®} PP 6102 + 50 % Sand | 0 | 24,97 | 2,76 | 0,11 | 66 |
| | | 20 | 10,61 | 1,25 | 0,12 | |
| | | 50 | 5,26 | 1,08 | 0,21 | |
| | | 100 | 1,10 | 0,23 | 0,20 | |
| F4 | 30 % Licocene^{®} PP 6102 + 70 % Sand | 0 | 63,35 | 7,81 | 0,12 | 68 |
| | | 20 | 31,68 | 5,01 | 0,16 | |
| | | 50 | 14,11 | 3,67 | 0,26 | |
| | | 100 | 4,10 | 1,31 | 0,32 | |
| F5 | 10 % Licocene^{®} PP 6102 + 90 % Sand | 0 | 29,25 | 2,66 | 0,09 | 69 |
| | | 20 | 17,09 | 2,16 | 0,13 | |
| | | 50 | 7,27 | 1,35 | 0,19 | |
| | | 100 | 4,76 | 1,40 | 0,30 | |
| F6 | 30 % Licocene^{®} PP 2602 + 70 % Sand | 0 | 14,38 | 2,93 | 0,20 | 68 |
| | | 20 | 4,40 | 0,59 | 0,13 | |
| | | 50 | 1,26 | 0,16 | 0,13 | |
| | | 100 | - | - | - | |
| F7 | 30 % Licocene^{®} PP 1602 + 70 % Sand | 0 | 10,64 | 3,65 | 0,34 | 63 |
| | | 20 | 3,30 | 0,51 | 0,15 | |
| | | 50 | 0,81 | 0,11 | 0,14 | |
| | | 100 | - | - | - | |
| Licocene^{®} PP 1602 | pur | 0 | 1,58 | 0,88 | 0,55 | 64 |
| | | 20 | 0,06 | 0,01 | 0,19 | |
| | | 50 | 0,02 | 0,002 | 0,13 | |
| | | 100 | - | - | - | |
| Licocene^{®} PP 2602 | pur | 0 | 9,24 | 3,61 | 0,38 | 61 |
| | | 20 | 1,37 | 0,24 | 0,18 | |
| | | 50 | 0,37 | 0,05 | 0,09 | |
| | | 100 | - | - | - | |
| Licocene^{®} PP 6102 | pur | 0 | 17,59 | 2,24 | 0,12 | 81 |
| | | 20 | 7,97 | 0,94 | 0,12 | |
| | | 50 | 3,26 | 0,57 | 0,18 | |
| | | 100 | 0,56 | 0,13 | 0,23 | |

Allgemeine Herstellweise: die eingesetzten Wachse und metallocene-katalysierten Polyolefine werden bei < 200 °C aufgeschmolzen bis sie geschmolzen sind und beispielsweise im Vakkumverfahren in den Füllstoffkörper (Sand) gesaugt bzw. das flüssige Wachs und metallocene-katalysierten Polyolefine wird unter leichter Druckbeaufschlagung in den Füllstoffkörper gegossen respektive gedrückt.

## Patentansprüche

1. Vergussmasse enthaltend
a) ein oder mehrere Wachse auf Basis von metallocen-katalysierten Polyolefinen, die
• einen Erweichungspunkt Ring/Kugel im Bereich von 50 bis 165 °C,
• eine Schmelzviskosität, gemessen bei einer Temperatur von 170 °C, im Bereich von 20 bis 40.000 mPa·s und
• eine Glasübergangstemperatur T_{g} von maximal -10 °C besitzen und
b) einen oder mehrere anorganische Füllstoff/e.

2. Vergussmasse nach Anspruch 1, **dadurch gekennzeichnet, dass** die Polyolefinwachse durch Polymerisation von Ethylen und/oder Propylen in Gegenwart von Metallocenen als Katalysator hergestellt wurden.

3. Vergussmasse nach Anspruch 1 und/ oder 2, **dadurch gekennzeichnet, dass** die Polyolefinwachse a) und einen Schmelzflussindex MFI von mehr als 30 g/10 min, gemessen nach ISO 1133 bei einer Temperatur von 190 °C und einem Auflagegewicht von 2,16 kg besitzen.

4. Vergussmasse nach mindestens einem der vorhergehenden Ansprüche **dadurch gekennzeichnet, dass** als anorganische Füllstoffe Sande, Kreiden, natürliche gemahlene oder gefällte Calciumcarbonate, Calcium-Magnesium-Carbonate, Calciumoxid, Silicate, Schwerspat, Graphit, Russ und/oder Vermiculit, Glimmer, Talk oder Schichtsilikate eingesetzt werden.

5. Vergussmasse nach mindestens einem der vorhergehenden Ansprüche **dadurch gekennzeichnet, dass** das Gewichtsverhältnis Polyolefinwachs zu anorganischem Füllstoff im Bereich von 1 : 99 bis 99 : 1 liegt.

6. Vergussmasse nach mindestens einem der vorhergehenden Ansprüche **dadurch gekennzeichnet, dass** diese 61 bis 89 Gew.-% Polyolefin und 11 bis 39 Gew.-% Füllstoff enthält.

7. Vergussmasse nach mindestens einem der vorhergehenden Ansprüche, **dadurch gekennzeichnet, dass** diese zusätzlich zu den Komponenten a) und b) noch die Komponente c) enthalten, wobei c) für
ein oder mehrere polar modifizierte Copolymerwachse, hergestellt durch Umsetzung des Polyolefins a) mit einer α, β -ungesättigten Carbonsäure oder deren Derivaten in Gegenwart von Radikalbildnern steht.

8. Vergussmasse nach mindestens einem der vorhergehenden Ansprüche, **dadurch gekennzeichnet, dass** diese zusätzlich 0 bis 90 Gew.-% aliphatische und cycloaliphatische oder aromatische Kohlenwasserstoffharze als Komponente d), bezogen auf das Gesamtgewicht der Zusammensetzung, enthält.

9. Vergussmasse nach Anspruch 8, **dadurch gekennzeichnet, dass** diese eine Viskosität im Bereich von 100 bis 10.000 mPa·s bei 170 °C besitzt.

10. Verbundmasse nach mindestens einem der vorhergehenden Ansprüche, **dadurch gekennzeichnet, dass** diese weitere Additive aus der folgenden Gruppe enthält: Pigmenten, Farbstoffen, Antioxidantien, Geruchsbinderen, antimikrobielle Wirksubstanzen, Lichtschutzmittelen, Duftstoffen, Haftvermittlern sowie Additive zur Erhöhung der Wärmeleitfähigkeit und/oder Erhöhung/Reduzierung der elektrischen Leitfähigkeit.

11. Verwendung der Zusammensetzung, welche im Wesentlichen aus Licocene® Performance Polymer und Füllstoff als Vergussmasse bestehen.

12. Verwendung einer Vergussmasse nach mindestens einem der Ansprüche 1 bis 11 zur Herstellung von Baumaterialien, insbesondere für die Herstellung von Verbindungselementen zur Verkapselungen von elektronischen Schaltungen, elektrischen Geräten, Motoren, Pumpen sowie einzelne Bauteile und Baugruppen, insbesondere Statorbefestigung bei Tauchpumpenaggregate, insbesondere als Vergussmittel für den Stator eines Elektromotors.
